# EUROPÄISCHE PATENTSCHRIFT

(11) **EP 0 752 941 B1**
(45) Veröffentlichungstag und Bekanntmachung des Hinweises auf die Patenterteilung: **14.01.1998**
(21) Anmeldenummer: 95913863.7
(22) Anmeldetag: 27.03.1995
(51) Int. Cl.: B60T 8/36, H01F 5/04

(54) **ELEKTROHYDRAULISCHE DRUCKEINSTELLVORRICHTUNG, INSBESONDERE FÜR EINE SCHLUPFGEREGELTE FAHRZEUGBREMSANLAGE**
ELECTRO-HYDRAULIC PRESSURE REGULATING DEVICE, ESPECIALLY FOR A CONTROLLED-SLIP VEHICLE BRAKE SYSTEM
DISPOSITIF ELECTRO-HYDRAULIQUE REGULATEUR DE PRESSION, NOTAMMENT POUR LE SYSTEME DE FREINAGE A PATINAGE CONTROLE D'UN VEHICULE

(30) Priorität: 13.04.1994 DE 4412664
(43) Veröffentlichungstag der Anmeldung: 15.01.1997
(73) Patentinhaber: ROBERT BOSCH GMBH, 70442 Stuttgart (DE)
(72) Erfinder: STAIB, Helmut, D-71701 Schwieberdingen (DE); GLOCK, Günther, D-71711 Steinheim (DE); FRIEDOW, Michael, D-71732 Tamm (DE); LANDER, Jürgen, D-70563 Stuttgart (DE); PECHTOLD, Ulrich, D-71732 Tamm (DE)
(86) Internationale Anmeldenummer: DE9500410
(87) Internationale Veröffentlichungsnummer: WO9528303

(56) Entgegenhaltungen:
- EP-A- 0 499 670
- WO-A-91/01907
- WO-A-91/10583
- WO-A-92/08630
- WO-A-95/05301
- DE-A- 4 100 967

## Beschreibung

### Stand der Technik

Die Erfindung geht aus von einer elektrohydraulischen Druckeinstellvorrichtung nach der Gattung des Patentanspruchs 1.

Aus der gattungsbildenden WO-A-92/086 30 ist eine elektrohydraulische Druckeinstellvorrichtung bekannt, welche einen Deckel mit einem Boden aufweist, auf dem eine flexible Platine befestigt ist, wahrend Spulen für elektromagnetisch betätigbare Ventile unterhalb des Bodens angeordnet sind. Die Spulen haben elektrische Kontaktelemente in Form von geraden Anschlußdrähten, welche parallel zur Längsachse der Spulen verlaufend durch jeweils eine Öffnung des Bodens greifen. Dort sind die Anschlußdrähte mit flexiblen Fingern der Platine stoffschlüssig verbunden. In jeder Öffnung des Bodens ist außerdem ein gummielastischer Dichtstopfen mit Vorspannung aufgenommen. Dieser umhüllt den jeweiligen Anschlußdraht auf einem Teil seiner Länge sowie einen spulenseitigen Zapfen, von dem der Anschlußdraht ausgeht, mit Reibschluß. Da die flexiblen Finger nur in geringem Maß die Spulen tragen können, wird die Halterung der Spulen im wesentlichen von den Dichtstopfen sowie zu einem kleinen Teil von den Anschlußdrähten übernommen. Die Dichtstopfen schränken die Elastizität der Halterung der Spulen sowohl axial als auch radial aber ein.

Aus der DE-A-41 00 967 ist ferner eine Druckeinstellvorrichtung bekannt, bei der in einem haubenförmigen Deckel die Spulen von Magnetventilen elastisch nachgiebig aufgehängt sind, um beim Fügen mit einem Ventilblock relativ zu diesem ausrichtbar zu sein. Hierzu sind elastische Halterungen vorgesehen, die von einem Trägerelement des Deckels ausgehen und an den Spulen angreifen. Sie erlauben eine radiale und axiale Nachgiebigkeit der Spulen. Darüber hinaus sind die Spulen mit einem im Deckel aufgenommenen elektronischen Regler durch elektrische Kontaktelemente verbunden. Diese müssen gleichfalls nachgiebig ausgebildet sein, um der Ausrichtbewegung der Spulen folgen zu können. Die elektrischen Kontaktelemente können innerhalb der elastischen Halterungen angeordnet sein. Der Aufwand für das Halten der Spulen und deren Kontaktierung mit dem Regler ist daher relativ hoch.

### Vorteile der Erfindung

Die erfindungsgemäße Druckeinstellvorrichtung mit den kennzeichnenden Merkmalen des Patentanspruchs 1 hat demgegenüber den Vorteil, daß die auch zum Halten der Spule dienenden elektrischen Kontaktelemente, insbesondere des Deckels, eine erhöhte elastische Nachgiebigkeit quer zur Längsachse der Spule bereitstellen, also in der Richtung, in welcher die Spule beim Aufstecken auf den Ventildom bei Achsversatz ausweichen muß. Die Spule ist somit relativ zum Ventildom gut ausrichtbar und die dabei auftretenden Beanspruchungen führen nicht zum Bruch oder Abreißen der Stanzgitterstreifen, die trotzdem aber das Eigengewicht der Spule tragen können.

Durch die in den Unteransprüchen aufgeführten Maßnahmen sind vorteilhafte Weiterbildungen und Verbesserungen der im Patentanspruch 1 angegebenen Druckeinstellvorrichtung möglich.

Die im Anspruch 2 angegebene Ausgestaltung der Erfindung hat den Vorteil, daß bei verminderter Positioniergenauigkeit eine einfach erzeugbare Verbindung zwischen Draht und Befestigungsfahne erzielt wird.

Zweckmäßige Formgebungen für die Anschlußdrähte sind im Anspruch 3 angegeben.

Durch die im Anspruch 4 gekennzeichnete Ausgestaltung der Erfindung wird die Herstellung der Verbindung und deren optische Kontrolle erleichtert.

Mit der Maßnahme nach Anspruch 5 wird in vorteilhafter Weise eine hohe axiale Lagegenauigkeit der Spule erzielt, so daß deren Ausrichtung relativ zum Ventildom lediglich im wesentlichen in radialer Richtung erfolgt. Hierdurch wird die mechanische Beanspruchung der elektrischen Kontaktelemente gering gehalten.

### Zeichnung

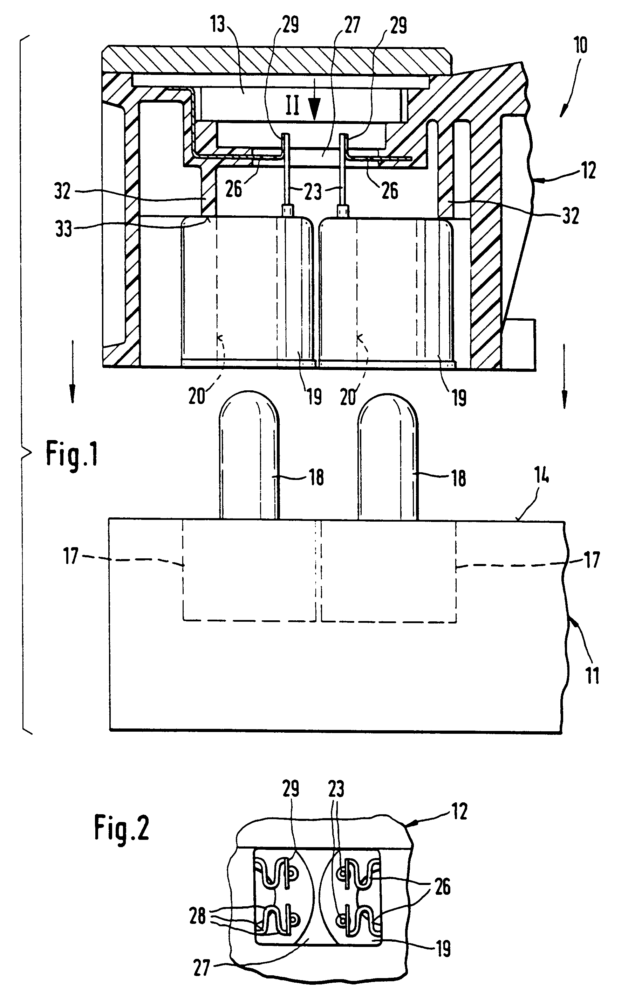

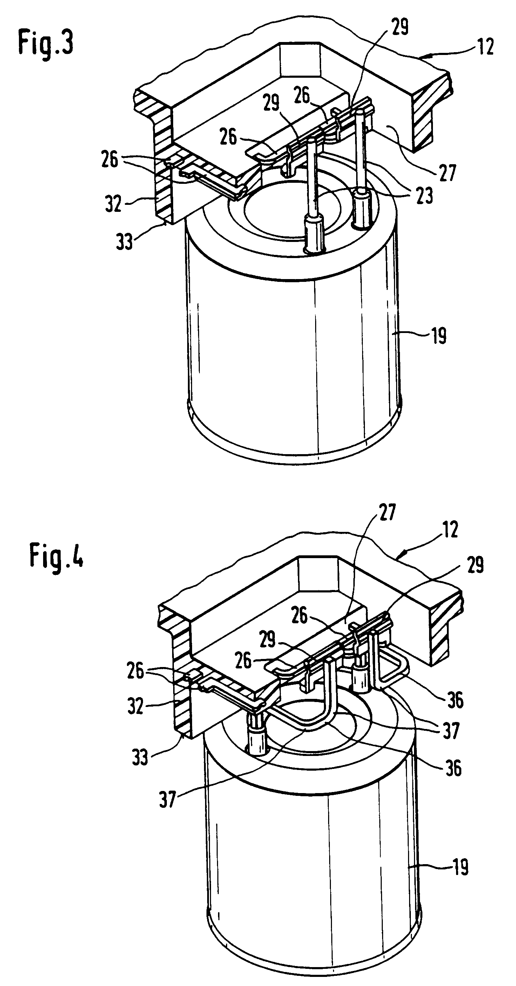

Zwei Ausführungsbeispiele der Erfindung sind in der Zeichnung vereinfacht dargestellt und in der nachfolgenden Beschreibung näher erläutert. Es zeigen Figur 1 eine Ansicht einer Druckeinstellvorrichtung beim Fügen eines Deckels mit Spulen auf einen Ventilblock, Figur 2 einen Ausschnitt aus Figur 1 in Richtung des Pfeiles II gesehen mit der Halterung und der Kontaktierung dienenden Elementen zwischen den Spulen und dem Deckel, Figur 3 in perspektivischer Ansicht ein erstes Ausführungsbeispiel dieser Elemente und Figur 4 ein zweites Ausführungsbeispiel der Elemente in Figur 3 entsprechender Darstellung.

### Beschreibung der Ausführungsbeispiele

In Figur 1 ist mit 10 eine elektrohydraulische Druckeinstellvorrichtung für eine nicht dargestellte, schlupfgeregelte Fahrzeugbremsanlage bezeichnet. Die Druckeinstellvorrichtung 10 besteht im wesentlichen aus einem Ventilblock 11 und einem haubenförmigen Deckel 12 mit einem darin angeordneten elektronischen Steuergerät 13. Der Deckel 12 ist im Fertigzustand der Druckeinstellvorrichtung 10 mit dem Ventilblock 11 entlang einer Stützfläche 14 an diesem angreifend mit nicht dargestellten Befestigungsmitteln verbunden. Die Darstellung nach Figur 1 gibt, wie durch Pfeile angedeutet, einen Zustand beim Fügen des Deckels 12 auf den Ventilblock 11 wieder.

Im Ventilblock 11 sind elektromagnetisch betätigbare Ventile 17 aufgenommen. Diese besitzen einen rechtwinklig zur Stützfläche 14 vom Ventilblock 11 aufragenden Ventildom 18. Für die Betätigung der Ventile 17 ist je eine im wesentlichen aus Wicklung, Wicklungsträger, Anschlußdrähten und magnetflußleitendem Mantel bestehende Spule 19 im Deckel 12 aufgenommen. Diese besitzen eine Innenbohrung 20, deren Durchmesser passend auf den Durchmesser der Ventildome 18 abgestimmt ist. Beim Absenken des Deckels 12 auf den Ventilblock 11 sind die Spulen 19 bezüglich der Ventildome 18 ausrichtbar und auf diese steckbar. Dies wird durch folgende, an einer Spule 19 erläuterte Maßnahmen erzielt:

Die Spule 19 ist auf ihrer vom Ventilblock 11 abgewandten Seite mit elektrischen Kontaktelementen in Form von zwei Anschlußdrähten 23 versehen. Beim in den Figuren 1 bis 3 dargestellten ersten Ausführungsbeispiel sind die Anschlußdrähte 23 gestreckt und verlaufen parallel zur Längsachse der Innenbohrung 20, welche zugleich die Längsachse der Spule 19 sowie im Fertigzustand der Druckeinstellvorrichtung 10 die des Ventildoms 18 ist. Die Anschlußdrähte 23 haben Kreisquerschnitt; sie können aber auch (wie beim zweiten Ausführungsbeispiel nach Figur 4) Vierkantquerschnitt besitzen. Die Anschlußdrähte 23 sitzen drehfest im Wicklungsträger der Spule 19.

Für die elektrische Verbindung der Spule 19 mit dem Steuergerät 13 sind elektrische Kontaktelemente des Deckels 12 in Form von in diesem verankerten, schmalen Stanzgitterstreifen 26 vorgesehen. Die Stanzgitterstreifen 26, welche in den aus einem isolierenden Werkstoff bestehenden Deckel 12 eingegossen sind, treten mit ihrem freien Endabschnitt aus dem Wandquerschnitt des Deckels in einen Durchbruch 27 desselben aus, der von den Anschlußdrähten 23 der Spule 19 durchdrungen ist. Die Stanzgitterstreifen 26 erstrecken sich in einer rechtwinklig zur Längsachse der Spule 19 verlaufenden Ebene und besitzen innerhalb des Durchbruchs 27 liegende mäanderförmige Abkröpfungen 28. Aufgrund dieser Formgebung, ihrer Länge sowie ihres Querschnittes weisen die Stanzgitterstreifen 26 eine relativ hohe elastische Nachgiebigkeit in einer rechtwinklig zur Längsachse der Spule 19 verlaufenden Ebene auf. Die Stanzgitterstreifen 26 haben an ihrem freien Ende eine Befestigungsfahne 29, welche parallel zum zugeordneten Anschlußdraht 23 verläuft und mit diesem durch eine stoffschlüssige Verbindung, d. h. durch Schweißung oder Lötung vereinigt ist.

Dieser Fügevorgang kann in folgender Weise stattfinden: Die Spule 19 wird in eine den Ventilblock 11 mit Ventildom 18 ersetzende Hilfsvorrichtung aufgenommen. Mehrere Spulen 19 erhalten dabei ihre axiale und gegenseitige sowie bezüglich der Anschlußdrähte 23 lagerichtige Zuordnung. Der Deckel 12 wird mit seinem freien Durchbruch 27 von oben über die Spulen 19 abgesenkt und dabei auf der Hilfsvorrichtung bezüglich der Spulen 19 lagerichtig fixiert, so daß sich die Anschlußdrähte 23 entlang der Befestigungsfahnen 29 der Stanzgitterstreifen 26 erstrecken. In dieser Position sind die Spulen 19 an einer durch Rippen 32 des Deckels 12 erzeugten Stützfläche 33 axial abgestützt. Die stoffschlüssige Verbindung der Stanzgitterstreifen 26 mit den Anschlußdrähten 23 wird nun im von der spulenabgewandten Seite her frei zugänglichen Durchbruch 27 des Deckels 12 hergestellt.

Nach Vervollständigung des Deckels 12 mit dem Steuergerät 13 und weiteren, nicht dargestellten Elementen der Druckeinstellvorrichtung 10 ist diese Baugruppe für sich fertiggestellt. Dabei übernehmen die verbundenen Anschlußdrähte 23 der jeweiligen Spule 19 und Stanzgitterstreifen 26 des Deckels 12 sowohl die elektrische Verbindung der Spule mit dem Steuergerät 13 als auch die Haltefunktion für die im Deckel aufgenommene Spule. Mit anderen Worten: Die Anschlußdrähte 23 und die Stanzgitterstreifen 26 sind als integrale Elemente für die elektrische Verbindung von Spule 19 und Steuergerät 13 sowie als nachgiebige Halterung der ausrichtbaren Spule im Deckel 12 ausgebildet. Diese Nachgiebigkeit ist in folgender Weise nutzbar:

Bei der Vereinigung des Ventiles 17 mit dem Ventilblock 11 treten unvermeidliche Toleranzen bezüglich der Lage des Ventildoms 18 sowie dessen Achsverlaufs auf. Bei mehreren Ventilen im Ventilblock 11 sind deren gegenseitige Zuordnung ebenfalls toleranzbehaftet. Beim Fügen des Deckels 12 auf den Ventilblock 11 vermag die einzelne Spule 19 diesen Abweichungen zu folgen, wenn der Ventildom 18 in die Innenbohrung 20 der Spule eingreift. Dabei erfahren die Anschlußdrähte 23 und die Stanzgitterstreifen 26 eine elastische Verformung, welche die stoffschlüssige Verbindung der Teile nicht gefährdet. Die Bemessung der Kontaktelemente von Spule 19 und Deckel 12 ist darüber hinaus derart, daß beim Transport und beim Fügen der Baugruppe auf den Ventilblock 11 keine bleibende Verformung der Anschlußdrähte 23 oder der Stanzgitterstreifen 26 auftritt. Eine Überlastung der Kontaktelemente ist bei auf dem Ventilblock 11 montiertem Deckel 12 durch Angriff der jeweiligen Spule 19 einerseits an der Stützfläche 14 des Ventilblocks und andererseits an der Stützfläche 33 des Deckels vermieden.

Beim zweiten Ausführungsbeispiel nach Figur 4 sind die Anschlußdrähte 36 der Spule 19 in stärkerem Maß an der Nachgiebigkeit der Spulenhalterung beteiligt. Die Anschlußdrähte 36 sind nämlich mehrfach in rechtwinklig zueinander verlaufenden Ebenen abgebogen. Das freie Ende der Anschlußdrähte 36 verläuft jedoch trotz dieser Abkröpfungen 37 wie beim ersten Ausführungsbeispiel parallel zur Längsachse der Spule und ist mit der entsprechenden Befestigungsfahne 29 des zugeordneten Stanzgitterstreifens 26 stoffschlüssig verbunden.

Abweichend von den beschriebenen Ausführungsbeispielen können die Stanzgitterstreifen 26 sowie die Anschlußdrähte 23 bzw. 36 einen wellenförmigen Verlauf haben, um eine ausreichende Nachgiebigkeit beim Ausrichten und Aufstecken der Spule 19 auf den Ventildom 18 zu erzielen.

## Patentansprüche

1. Elektrohydraulische Druckeinstellvorrichtung (10), insbesondere für eine schlupfgeregelte Fahrzeugbremsanlage,
mit wenigstens einem elektromagnetisch betätigbaren Ventil (17), das mit einem Ventilblock (11) vereinigt ist und einen vom Ventilblock aufragenden Ventildom (18) sowie eine zu dem Ventildom ausrichtbare und auf diesen steckbare Spule (19) hat,
mit einem die Spule (19) und den Ventildom (18) bedeckenden Deckel (12),
mit von der Spule (19) sowie von dem Deckel (12) ausgehenden, stoffschlüssig verbundenen elektrischen Kontaktelementen (23, 26, 36) für die elektrische Verbindung der Spule mit einem Steuergerät (13), wobei die sich wenigstens endseitig parallel zu der Längsachse der Spule (19) erstreckenden elektrischen Kontaktelemente (23, 36) der Spule (19) und die rechtwinklig zu dieser Längsachse verlaufenden elektrischen Kontaktelemente (26) des Deckels (12) zugleich nachgiebige Halterungen für die ausrichtbare Spule (19) sind, welche vor der Montage des Deckels (12) auf dem Ventilblock (11) mittels ihrer Kontaktelemente (23, 36) mit den Kontaktelementen (26) des Deckels (12) verbunden wird,
dadurch gekennzeichnet,
daß als elektrische Kontaktelemente in dem Deckel (12) verankerte, schmale Stanzgitterstreifen (26) vorgesehen sind, welche mäander- oder wellenförmige Abkröpfungen (28) aufweisen.

2. Elektrohydraulische Druckeinstellvorrichtung nach Anspruch 1, dadurch gekennzeichnet, daß die Stanzgitterstreifen (26) an ihrem freien Ende eine Befestigungsfahne (29) haben, welche parallel zum zugeordneten Anschlußdraht (23, 36) verlaufend mit diesem stoffschlüssig vereinigt ist.

3. Elektrohydraulische Druckeinstellvorrichtung nach Anspruch 2, dadurch gekennzeichnet, daß die Anschlußdrähte (23, 36) Kreis- oder Vierkantquerschnitt haben.

4. Elektrohydraulische Druckeinstellvorrichtung nach Anspruch 2, dadurch gekennzeichnet, daß der Deckel (12) einen Durchbruch (27) hat, durch den hindurch die Anschlußdrähte (23, 36) und die Stanzgitterstreifen (26) zur Herstellung ihrer stoffschlüssigen Verbindung zugänglich sind.

5. Elektrohydraulische Druckeinstellvorrichtung nach Anspruch 4, dadurch gekennzeichnet, daß der Deckel (12) eine Stützfläche (33) hat, gegen welche die Spule (19) bei der Herstellung der stoffschlüssigen Verbindung und nach dem Stecken auf den Ventildom (18) axial abgestützt ist.

## Claims

1. Electrohydraulic pressure-setting device (10), particularly for a slip-controlled vehicle brake system, with at least one electromagnetically actuable valve (17), which is combined with a valve block (11) and has a valve dome (18) projecting upwards from the valve block and a coil (19) which can be aligned relative to the valve dome and placed on the latter, with a cover (12) which covers the coil (19) and the valve dome (18), with electrical contact elements (23, 26, 36) which emanate from the coil (19) and from the cover (12), are connected materially and serve to connect the coil electrically to a control unit (13), the electrical contact elements (23, 36) of the coil (19) which extend parallel to the longitudinal axis of the coil (19), at least at the ends, and the electrical contact elements (26) of the cover (12), which extend at right angles to this longitudinal axis, being simultaneously flexible holders for the coil (19) capable of alignment, which is connected to the contact elements (26) of the cover (12) by means of its contact elements (23, 36) before the cover (12) is mounted on the valve block (11), characterized in that narrow pressed-screen strips (26), which are anchored in the cover (12) and have meander- or wave-shaped offsets (28), are provided as electrical contact elements.

2. Electrohydraulic pressure-setting device according to Claim 1, characterized in that the pressed-screen strips (26) have, at their free end, a fixing lug (29) which extends parallel to the associated terminal wire (23, 36) and is united materially to the latter.

3. Electrohydraulic pressure-setting device according to Claim 2, characterized in that the terminal wires (23, 36) have a circular or quadrilateral cross-section.

4. Electrohydraulic pressure-setting device according to Claim 2, characterized in that the cover (12) has an aperture (27) through which the terminal wires (23, 36) and the pressed-screen strips (26) are accessible for the production of the material connection between them.

5. Electrohydraulic pressure-setting device according to Claim 4, characterized in that the cover (12) has a supporting surface (33), against which the coil (19) is supported axially during the production of the material connection and after being plugged onto the valve dome (18).

## Revendications

1. Dispositif hydroélectrique régulateur de pression (10), en particulier pour un système de freinage de véhicule à antipatinage, comprenant au moins
• une vanne (17) qui peut être commandée de façon électromagnétique et qui est réunie à un bloc de vannes (11) en comprenant un dôme de vanne (18) qui fait saillie à partir du bloc de vannes,
• une bobine (19) que l'on peut orienter par rapport au dôme de vanne et que l'on peut enfiler sur celui-ci,
• un couvercle (12) qui recouvre la bobine (19) et le dôme de vanne (18), et
• des éléments électriques de contact (23, 26, 36) qui partent du couvercle (12) et sont reliés par engagement de matière, ces éléments servant à la liaison électrique de la bobine avec un appareil de commande (13),
• les éléments électriques de contact (23, 36) de la bobine (19), qui s'étendent au moins du côté terminal parallèlement à l'axe longitudinal de la bobine (19), et les éléments électriques de contact (26) du couvercle (12), qui s'étendent à angle droit par rapport à cet axe longitudinal, constituant en même temps, pour la bobine orientable (19), des fixations flexibles qui sont reliées aux éléments de contact (26) du couvercle (12), avant le montage du couvercle (12) sur le bloc de vannes (11), au moyen de leurs éléments de contact (23, 36)
caractérisé en ce qu'
on prévoit comme éléments électriques de contact dans le couvercle (12), des bandes de grillage estampées étroites (26), ancrées dans le couvercle (12), qui présentent des ondulations en forme de méandres ou de vagues.

2. Dispositif hydroélectrique régulateur de pression selon la revendication 1,
caractérisé en ce que
les bandes de grillage estampées (26) ont, sur leur extrémité libre, une cosse de fixation (29), qui, en s'étendant parallèlement au fil de raccordement (23, 36) correspondant, est réunie à celui-ci par engagement de matière.

3. Dispositif hydroélectrique régulateur de pression selon la revendication 2,
caractérisé en ce que
les fils de raccordement (23, 36) ont une section transversale circulaire ou carrée.

4. Dispositif hydroélectrique régulateur de pression selon la revendication 2,
caractérisé en ce que
le couvercle (12) comporte un ajour (27) à travers lequel sont accessibles les fils de raccordement (23, 36) et les bandes de grillage estampées (26) pour servir à réaliser leur liaison par engagement de matière.

5. Dispositif hydroélectrique régulateur de pression selon la revendication 4,
caractérisé en ce que
le couvercle (12) a une surface d'appui (33) contre laquelle prend appui axialement la bobine (19) lors de l'établissement de la liaison par engagement de matière et après l'enfilage sur le dôme de vanne (18).
